# EUROPÄISCHE PATENTSCHRIFT

(11) **EP 3 787 840 B1**
(45) Veröffentlichungstag und Bekanntmachung des Hinweises auf die Patenterteilung: **10.08.2022**
(21) Anmeldenummer: 19721264.0
(22) Anmeldetag: 30.04.2019
(51) Int. Cl.: B25C 1/06, H02K 41/025, B25C 1/04, H02K 33/14

(54) **HANDGEFÜHRTES NAGELSETZGERÄT UND ANTRIEB**
HAND-HELD NAIL GUN AND DRIVE
CLOUEUSE MANUELLE ET ENTRAÎNEMENT

(30) Priorität: 01.05.2018 DE 102018003496; 12.05.2018 DE 102018003811
(43) Veröffentlichungstag der Anmeldung: 10.03.2021
(73) Patentinhaber: Rhefor GbR, 12203 Berlin (DE)
(72) Erfinder: MECKLENBURG, Arno, 10999 Berlin (DE)
(74) Vertreter: Hoffmann Eitle
(86) Internationale Anmeldenummer: PCT/EP2019/061010
(87) Internationale Veröffentlichungsnummer: WO 2019/211264

(56) Entgegenhaltungen:
- EP-A2- 2 514 567
- DE-A1- 10 341 814
- DE-B1- 2 531 700
- DE-B3-102004 010 319
- US-A1- 2005 167 465

## Beschreibung

### Technisches Gebiet

Die vorliegende Erfindung betrifft einen Antrieb für ein handgeführtes Nagelsetzgerät.

### Hintergrund

Pneumatisch angetriebene handgeführte Akku-Nagelsetzgeräte, bei denen das Setzgerät selbst einen eigenständigen Kompressor sowie ein Arbeitsgasreservoir zur Aufnahme der vom Kompressor bereitgestellten Druckluft umfasst, sind allgemein bekannt und Stand der Technik, beispielsweise aus US 7 225 959 B2 von der Fa. Black & Decker. Bei diesen Setzgeräten erzeugt ein Kompressor nach bekannten Verfahren Druckluft, welche im Arbeitsgasreservoir gespeichert wird; zum Setzen eines Nagels wird die Druckluft aus dem Arbeitsgasreservoir vermittels eines Ventilsystems in einen Pneumatikzylinder geleitet und übt dort aus den Boden eines Arbeitskolbens einen Druck aus, diesen zu beschleunigen. Ein Nagel wird schließlich mit Hilfe des Kolbens (bzw. mittels der kinetischen Energie des Kolbens sowie daran ggf. gefestigter weiterer Teile) eingetrieben. Bei einer anderen Art akkubetriebener handgeführter Nagelsetzgeräte, welche vom Hersteller Senco unter dem Begriff "Fusion Technology" angeboten wird, dient der Arbeitskolben selbst zugleich als Kompressor: Beim Rückstellen des Arbeitskolbens mit Hilfe eines elektrischen Antriebs verdichtet dieser ein Arbeitsgas (Stickstoff). In diesem Zustande wird der Kolben von einem Mechanismus blockiert. Ein Lösen des Mechanismus erlaubt dann dem zuvor verdichteten Arbeitsgas, den Arbeitskolben zum Eintreiben eines Nagels zu beschleunigen.

Aus WO/2018/104406 bekannt sind ferner Nagelsetzgeräte mit einem elektrodynamischen Direktantrieb, der eine Weiterentwicklung bekannter Thomson-Antriebe darstellt. Nagelsetzgeräte nach der Lehre von WO/2018/104406 können einen einfachen mechanischen Aufbau aufweisen. Brennkraftgetriebene Systeme haben zwar weite Verbreitung gefunden, weisen jedoch entscheidende Nachteile auf: Es werden Gaskartuschen (mit Brennstoff) oder Patronen (mit Treibladungen) verbraucht, was für den Anwender mit zusätzlichen Kosten und einem höheren logistischen Aufwand verbunden ist. Beim Betrieb werden ferner Schadstoffe emittiert, beispielsweise NOX, aber auch Schwermetalle bzw. Schwermetallverbindungen aus den Anzündsätzen der Patronen. Ferner liegt eine vergleichsweise hohe und unerwünschte Geräuschbelastung vor, sowie inhärente Sicherheitsrisiken, insbesondere bei Setzgeräten mit patronierten Treibladungen (z.B. sog. "cook off").

Pneumatische Antriebe mit Druckspeicher erscheinen für die Verwendung in akkubetriebenen handgeführten Nagelsetzgeräten (zumindest für höhere Setzenergien) weniger geeignet: Es müssen, um eine kompakte Bauweise zu ermöglichen, im Gerät mit einem Kompressor vergleichsweise hohe Drücke von zumindest einigen 10 Atmosphären erzeugt und in einem Reservoir gespeichert werden, was energetisch ungünstig ist: Wird wie allgemein üblich in einem polytropen, näherungsweise isothermen irreversiblen Regime gearbeitet, so wird aus dem größten Teil der eingesetzten mechanischen Arbeit - und damit auch dem überwiegenden Teil der eingesetzten elektrischen Energie - unmittelbar schwer nutzbare Abwärme. Der Nachteil des geringen Wirkungsgrades, d.h. einem elektrischen Wirkungsgrad von typischerweise weniger als 10%, schließt mit Hinblick auf realistisch verfügbare Akkumulator-Kapazitäten pneumatische Antriebe mit Druckspeicher für die Verwendung in akkubetriebenen handgeführten Nagelsetzgeräten nahezu aus.

Hinzu kommt, dass aus praktischen Gründen in einem handgeführten Gerät jedem Arbeitsgasreservoir strenge Grenzen bezüglich Volumen und Gewicht gesetzt sind. Durch das beschränkte Volumen des Druckspeichers (Arbeitsgasreservoirs) ergibt sich während eines Stellvorganges ein Druckabfall, der zu Lasten der erzielbaren Setzenergie geht.

Herkömmliche pneumatische Antriebe mit Federspeicher sind nur für handgeführte Nagelsetzgeräte mit vergleichsweise geringen Setzenergien geeignet, da die spezifischen Energien üblicher Federn gering sind, und sich folglich bei hohen Setzenergien für handgeführte Geräte prohibitive Federgewichte ergeben; diese Technologie ist also schlecht skalierbar. Geringe Setzenergien sind in diesem Zusammenhang Setzenergien im Bereich von höchstens 10 J. Diese sind zwar für Holzsetzgeräte ausreichend, nicht jedoch für den Trockenbau und Direktbefestigungen in Stahl.

DE 103 41 814 A1 offenbart die Merkmale des Oberbegriffs des Anspruchs 1 sowie ein Verfahren zum Betrieb eines elektrischen Schlagwerkzeugs, das ein Solenoid, einen teilweise in einem Ende des Solenoids aufgenommenen Tauchanker und eine mit dem Tauchanker zusammenwirkende Feder aufweist. Das Solenoid drückt bei seiner Aktivierung den Tauchanker von dem federabseitigen Ende zu einem Mittelabschnitt des Solenoids. Infolge einer Deaktivierung des Solenoids bewegt sich der Tauchanker gegen die Kraft der Feder. Eine nachfolgende erneute Aktivierung und Deaktivierung bewegt den Tauchanker in den Mittelabschnitt und dann in die Antriebsrichtung zusätzlich zu der von der Feder aufgebrachten Federkraft.

### Darstellung der Erfindung

Vor diesem Hintergrund besteht die erfinderische Aufgabe darin, einen Mechanismus oder Prinzip für einen Antrieb eines akkubetriebenes, handgeführtes und zumindest teilweise pneumatisch arbeitendes Nagelsetzgerät zu finden, der einen höheren Wirkungsgrad und/oder höhere Setzenergien, d.h. im Bereich von 50J und darüber (also z.B. beim Trockenbau und Direktbefestigung in Stahl) erreichen kann, als dies beim vorstehend beschriebenen Stand der Technik der Fall ist.

Gemäß einem Aspekt umfasst ein Antrieb für ein handgeführtes Nagelsetzgerät die Merkmale gemäß Anspruch 1. Bevorzugte Ausführungsformen sind in den Ansprüchen 2 - 8 definiert.

Weitere Vorteile und Weiterbildungen der Erfindung ergeben sich aus der nachfolgenden Figurenbeschreibung und der Gesamtheit der Ansprüche.

### KURZE FIGURENBESCHREIBUNG

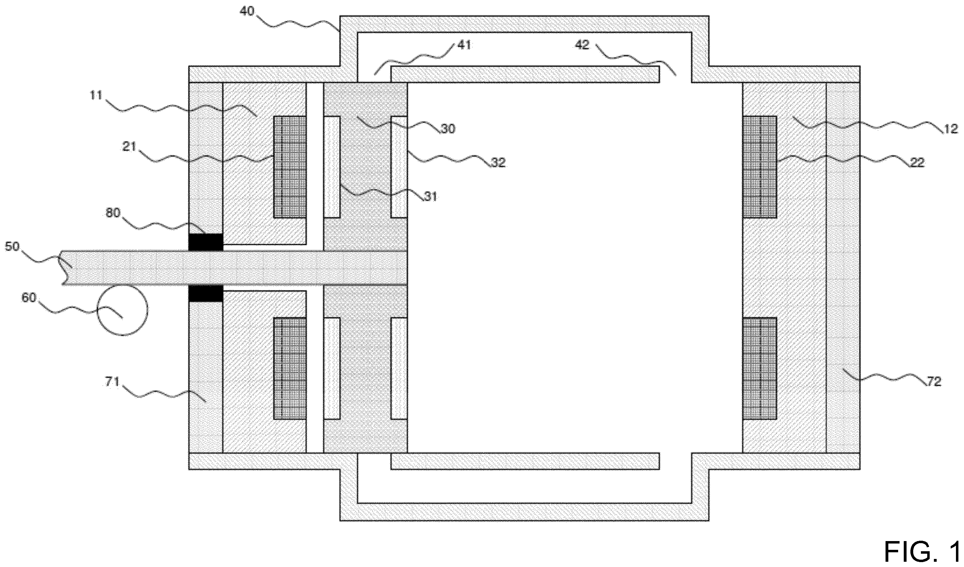

- Fig. 1: zeigt einen Antrieb gemäß einer Ausführungsform der vorliegenden Erfindung.

### WEGE ZUR AUSFÜHRUNG DER ERFINDUNG

In der nachfolgenden Beschreibung werden gleiche Bezugszeichen für gleiche oder entsprechende Elemente verwendet und eine sich wiederholende Beschreibung weitgehend vermieden.

Grundsätzlich besteht der erfinderische Mechanismus darin, Nägel mit Hilfe elektrisch betriebener Wärmekraftmaschinen zu setzen. Hierzu wird zunächst ein Arbeitsgas, z.B. Umgebungsluft, gefilterte Umgebungsluft oder dergleichen direkt oder mittelbar mit Hilfe mindestens einer elektrischen Maschine verdichtet.

Anschließend wird die Expansion des verdichteten Arbeitsgases genutzt, Arbeit zum Eintreiben bzw. Setzen eines Nagels bzw. Bolzens zu verrichten. Kennzeichnend für die Erfindung ist, dass dem System zusätzlich elektrische Energie zugeführt wird, insbesondere durch elektrisches Aufheizen des verdichteten Arbeitsgases vor oder während dessen Expansion. Dieses elektrische Aufheizen unterscheidet sich von einem heizen durch Verbrennung von Kraftstoff (bei sogenannten brennkraftbetriebenen Setzgeräten), wie im Folgenden erläutert wird.

Nachfolgend wird die Erfindung beispielhaft beschrieben. Die Beschreibung soll dem Fachmann eine leichte Umsetzung der Erfindung ermöglichen; keinesfalls ist sie einschränkend zu verstehen.

Eine scheinbar einfache Möglichkeit zur Verbesserung des Wirkungsgrades besteht darin, mit einer möglichst reversiblen, möglichst adiabatisch verlaufenden Verdichtung zu arbeiten, und das Arbeitsgas unter möglichst gründlicher thermischer Isolation in "heißem" Zustand zu speichern, und mit Hilfe eines Pneumatikzylinders zum Verrichten von Arbeit (d.h. hier dem Eintreiben von Nägeln) zu verwenden. Wärme- und Druckverluste können dabei vermittels Temperatur- und Druckfühlern erfasst und durch geregeltes Beheizen des Arbeitsgases bzw. auch "Nachpumpen" kompensiert werden. Diese Herangehensweise stellt allerdings erhebliche technische Anforderungen an den bevorzugt möglichst ungekühlt arbeitenden Kompressor. Am schwersten wiegt hier, dass bei den hohen Temperaturen die üblichen flüssigen Schmierstoffe versagen und dementsprechend auf eine zwangsläufig mit Abrieb verbundene (Festkörperreibung!) Schmierung mit festen Schmierstoffen übergegangen werden muss. Außerdem wirkt heiße Luft natürlich stark oxidierend. Hinzu kommen ggf. z.B. Passungsprobleme infolge von Temperaturgradienten wegen der thermischen Ausdehnung. Erfindungsgemäß wird das Arbeitsgas als "heiß" betrachtet, wenn seine absolute Temperatur wenigstens 150% und bevorzugst mehr als 200% der absoluten Umgebungstemperatur beträgt.

Ein Aspekt der vorliegenden Erfindung besteht darin, dem bereits verdichteten Arbeitsgas vermittels einer elektrisch betriebenen Wärmequelle Wärme zuzuführen, beispielsweise zum Ausgleich von Wärmeverlusten (z.B. Wandverlusten) nach einem überwiegend adiabatischen Verdichtungsvorgang. In vielen Fällen attraktiver ist allerdings, das Arbeitsgas, insbesondere angesaugte Umgebungsluft, mit einem gewöhnlichen gekühlten Kompressor zunächst auf ein Verdichtungsverhältnis zu verdichten, welches bevorzugt zwischen 1:2 und 1:20 liegt und besonders bevorzugt im Bereich von 1:5 bis 1:15, und dem Arbeitsgas anschließend mit einer oder mehreren elektrisch betriebenen Wärmequellen Wärme zuzuführen.

Dies kann beispielsweise in einem Arbeitsgasreservoir erfolgen, in welches das verdichtete Arbeitsgas, z.B. mittels Druckdifferenz über ein Ventil, gefördert worden ist, und das, abgesehen von praktisch unvermeidlichen Undichtheiten, zunächst geschlossen ist. Die Förderung erfolgt also bevorzugt entweder vom Kompressor direkt in das Arbeitsgasreservoir (ggf. über einen Kühler, der allerdings mit dem Kompressor eine Einheit bilden kann) oder von einem zweiten Arbeitsgasreservoir mit höherem Druck über ein Rückschlagventil in das vorgenannte elektrisch beheizbare Arbeitsgasreservoir.

Dies ermöglicht bei raschem Heizen eine nahezu isochore Wärmezufuhr, die gefolgt sein kann von einer weitgehend isentrop verlaufenden Entspannung des gespeicherten heißen Arbeitsgases über einen Pneumatikzylinder (durch Öffnen eines Ventils). Dieser "Kreisprozess" ähnelt einem Otto-Prozess mit vorgelagertem Verdichter und Intercooler (näherungsweise isotherme Kompression, isochore Wärmezufuhr, adiabatische Expansion), er kann entsprechend einen hohen Wirkungsgrad von höher als 25% und insbesondere höher als 30% bieten, wobei bei der Auslegung des Systems Reibmitteldruck und Irreversibilitäten durch strömungsbedingte Druckverluste berücksichtigt werden sollten. Die Wärmezufuhr, die bevorzugt eine Wärmemenge in der Größenordnung der Setzenergie und mehr zuführt, also beispielsweise Wärmeenergie in einem Bereich von 50 - 500 J erfolgt somit beispielsweise auf einer Zeitskala unter 1s, bevorzugt unter 500ms, so dass Wärmeverluste und insbesondere Wandverluste des Arbeitsgasreservoirs klein sind im Vergleich zu der zugeführten Wärmeenergie.

Sollen indes besonders hohe Setzenergien von z.B. mehr als 50J, insbesondere mehr als 80J erzielt werden, so kann dies unter Kompromissen beim Wirkungsgrad verwirklicht werden, indem die Wärmezufuhr weiter nachgelagert wird. Nachgelagert bedeutet hier, dass die Wärmezufuhr nicht isochor in einem Reservoir erfolgt, sondern dass das Arbeitsgas zuerst in einem Arbeitsgasreservoir (unter Druck) gespeichert und nach Austritt aus diesem Arbeitsgasreservoir erhitzt wird. Wie im Folgenden beschrieben wird der "Kreisprozess" dadurch Diesel-ähnlicher, er nimmt also die Gestalt eines Gleichdruckprozesses an. Dessen Wirkungsgrad ist zwar bei gleichem Verdichtungsverhältnis geringer als der eines Ottoprozesses (isochore Wärmezufuhr), es kann aber ein höherer Mitteldruck erreicht und damit pro Hub/Setzvorgang mehr Arbeit verrichtet werden.

Beispielsweise kann das "kühle" Arbeitsgas aus seinem Reservoir mit einem Ventil durch elektrisch beheizte Heizbleche oder einen anderen elektrisch betriebenen Heizkörper geführt werden, der beispielsweise einen offenporigen, von einem Heizleiter gebildeten Metallschaum enthalten kann, sodass sich beispielsweise eher ein Gleichdruckprozess (anstelle eines Gleichraumprozesses) ergibt. Oder es wird dem Arbeitsgas im Pneumatikzylinder selbst Wärme zugeführt, wozu zum Beispiel ein am Kolbenboden befestigter (zumindest vor dem Setzvorgang) elektrisch beheizter Heizleiter infrage kommt, aber auch eine elektrische Heizung der Zylinderwand oder sogar eine Gasentladung im Pneumatikzylinder selbst. Es kann auch ein Nagelsetzgerät mehrere elektrische Wärmequellen an verschiedenen Stellen beinhalten, um die vorgenannten Eigenschaften bedarfsweise besser kombinieren und einen anwendungsspezifischen Kompromiss finden zu können.

Ein Nagelsetzgerät, insbesondere handgeführtes Nagelsetzgerät kann folgende Komponenten umfassen: einen elektrochemischen Energiespeicher, bevorzugt einen Lithium-Ionen-Akkumulator; einen Kompressor, bevorzugt einen Kolbenkompressor; einen elektrischen Motor; ein erstes Ventil, beispielsweise ein Magnet- oder Überdruckventil, welches vorzugsweise eine Öffnungszeit von weniger als 10ms, weiter bevorzugt eine Öffnungszeit von weniger als 5ms, und besonders bevorzugt eine Öffnungszeit von weniger als 3ms aufweist; sowie ein Arbeitsgasreservoir (das mit dem Zylinder eines Kompressors identisch sein kann); einen Zylinder, in dem ein Kolben beweglich angeordnet ist; eine elektrisch betreibbare Energiequelle, insbesondere eine elektrische Wärmequelle, die zusätzlich eine chemische Wärmequelle umfassen kann.

Erstes nicht-beanspruchtes Beispiel zum Verständnis der Erfindung:
Zum Setzen eines Nagels wird zunächst aus dem elektrochemischen Energiespeicher der Motor mit elektrischer Leistung versorgt, den Kompressor anzutreiben, der ein Arbeitsgas - z.B. gefilterte Umgebungsluft - verdichtet, welches im Arbeitsgasreservoir gespeichert wird. Zum Setzen eines Nagels wird das erste Ventil geöffnet und das Arbeitsgas strömt in thermischem Kontakt mit der elektrisch betriebenen Wärmequelle (zum Beispiel durch einen elektrisch beheizten Heizkörper in Gestalt z.B. eines Wickels aus Heizleiter-Blech) in den Zylinder und treibt dort den Kolben an, welcher direkt oder mittelbar den Nagel eintreibt. Im Unterschied zu bekannten Geräten kann bei diesem Vorgang dem Arbeitsgas durch die elektrisch betriebene Wärmequelle schnell zusätzlich Wärme zugeführt werden, wie oben erläutert. Hierzu sind - unter Berücksichtigung derer Aerodynamik und chemischen Eigenschaften - diverse Heizleiter (z.B. ein offenporiger Metallschaum, bspw. aus Kanthal, ein Rohrbündel oder eine Wabenstruktur aus ebendiesem, stabförmige SiC-Heizleiter etc.) geeignet, aber auch Gasentladungen und insbesondere Bogenentladungen; letztere können z.B. mit Hilfe sogenannter Plasmafackeln herbeigeführt werden. Wird diese Methode (Gasentladung) gewählt, so kann Elektrodenmaterial verdampfen, welches brennbar sein und durch chemische Umsetzung mit dem Arbeitsgas diesem zusätzlich Wärme zuführen kann. Das Elektrodenmaterial wird bevorzugt danach ausgewählt, keine elektrisch leidenden Oxide zu bilden. Bei einer Gleichspannungsentladung kommen insbesondere für die Kathode Kohlenstoff- und/oder aluminiumbasierte Werkstoffe infrage, einschließlich aluminiumimprägniertem Graphit. Bei Gebrauch aluminiumhaltiger Elektroden mit sauerstoffhaltigem Arbeitsgas ist die mögliche Bildung von Aluminiumoxid-Feinstaub, bei Luft als Arbeitsgas auch die Bildung von Aluminiumnitrid- bzw. Aluminiumoxynitrid-Feinstaub zu berücksichtigen.

Zweites nicht-beanspruchtes Beispiel zum Verständnis der Erfindung:
Die Wärmezufuhr durch die elektrisch betriebene Wärmequelle kann im Arbeitsgasreservoir selbst erfolgen und binnen möglichst kurzer Zeit (Zeitskalen wie oben erläutert) durchgeführt werden. Für das erste Ventil, welches Arbeitsgas aus dem Arbeitsgasreservoir in den Zylinder strömen lassen kann, kann in diesem Fall ein ungesteuertes Überdruckventil ausgelegt werden, welches bevorzugt mit einer gewissen, bekannten Verzögerung öffnet - dann jedoch möglichst rasch einen möglichst großen Querschnitt freigibt, damit das Arbeitsgas mit geringem Druckverlust in den Zylinder überströmen kann. Sofern die Wärmezufuhr durch die elektrisch betriebene Wärmequelle im Arbeitsgasreservoir erfolgt, ist zu berücksichtigen, dass das erste Ventil hohen Temperarturen ausgesetzt wird, und dies, falls das Arbeitsgas nicht inert sondern insbesondere Luft ist, unter stark oxidierenden Bedingungen. Wie jeder Dieselmotor demonstriert, der bei hohen Temperaturen mit hohem Luftüberschuss und in Gegenwart korrosiver Verunreinigungen wie Schwefel(-verbindungen) viele tausend Betriebsstunden erreichen kann, ist die Aufgabe der Bereitstellung eines hinreichend schnellen Ventils (das den chemischen und thermischen Umgebungsbedingungen über die Lebensdauer des Geräts standhält) vom Fachmann problemlos zu lösen.

Die mindestens eine elektrisch betriebene Wärmequelle (allgemeiner: Energiequelle) kann, wie bereits gesagt, auch zwischen Arbeitsgasreservoir und Zylinder oder am oder im Zylinder selbst angeordnet sei, wobei das erste Ventil bevorzugt ein magnetisch oder pneumatisch gesteuertes Ventil ist. Derartige Varianten können eine noch bessere Steuerbarkeit und höhere Setzenergien ermöglichen, allerdings zu Lasten des theoretisch erreichbaren Wirkungsgrads. In allen Varianten, bei denen eine oder mehrere Gasentladungseinrichtungen wie z.B. Plasmafackeln als Wärmequellen eingesetzt werden, gilt, dass vorteilhaft ist, die elektrische Energie, mit welcher diese versorgt bzw. betrieben werden, vorzugsweise in einem oder mehreren Kondensatoren zwischen zu speichern, wozu der oder die Kondensatoren bevorzugt mit einem Schaltwandler aufgeladen werden. Auf diesem Wege kann bei geeigneter Bemessung von Kondensatoren und elektrisch betriebener Wärmequelle kurzzeitig eine sehr hohe Heizleistung bereitgestellt werden, die durchaus im Bereich mehrerer MW liegen kann (anstelle von höchstens einigen 10 kW bei direkter Versorgung aus der elektrochemischen Energiequelle). Sofern als elektrisch betriebene Wärmequelle aber ein oder mehrere Heizleiter verwendet werden, kann die Wärmequelle direkt an der elektrochemischen Energiequelle betrieben werden, wobei es vorteilhaft sein kann, die Wärmequelle parallel zu Ultra- bzw. Superkondensatoren (mit Doppelschicht- und ggf. auch Pseudokapazitäten) zu betreiben.

Erfindungsgemäße Nagelsetzgeräte weisen vorzugsweise eine elektronische Steuerung sowie zumindest einen Druck- und ggf. auch einen Temperaturfühler auf, welche bevorzugt im Arbeitsgasreservoir angeordnet sind.

Drittes nicht-beanspruchtes Beispiel zum Verständnis der Erfindung:
Das dritte Beispiel bezieht sich auf pneumatische Nagelsetzgeräte mit Federspeicher, in denen ein erster Kolben in einem ersten Zylinder mit Hilfe einer zuvor elektromotorisch gespannten Feder beschleunigt wird und ein Arbeitsgas, insbesondere Luft, verdichtet, welche sodann einen zweiten Kolben in einem zweiten Zylinder beschleunigt, dessen kinetische Energie zum Setzen eines Nagels genutzt wird. Diese Anordnung dient zunächst als pneumatische Transmission, um am zweiten Kolben die für einen erfolgreichen und reproduzierbaren Setzvorgang erforderliche Kolbengeschwindigkeit mit der oben angegebenen Setzenergie von mehr als 50J zu erreichen. Damit wäre die erzielbare Setzenergie allerdings durch diejenige Energie beschränkt, welche elastisch in der Feder gespeichert werden kann. Dieses technische Hindernis kann radikal beseitigt werden, indem der vom ersten Kolben verdichteten Luft elektrisch genügend Wärme zugeführt wird. Dies kann wie an den vorangegangenen Beispielen gezeigt in verschiedenen thermodynamischen Regimes geschehen. Bei gleichem Verdichtungsverhältnis können möglichst hohe Wirkungsgrade mit einer isochoren Wärmezufuhr erreicht werden: Dazu wird das Arbeitsgas z.B. über ein Einlassventil, das ein Rückschlagventil sein kann, in eine Kammer möglichst konstanten Volumens geführt und dort elektrisch erhitzt, bevor es über ein passives Ventil (Überdruckventil) oder ein gesteuertes Ventil, jeweils möglichst schnell (insbesondere unterhalb der Stellzeit des Kolbens) öffnend und möglichst hohen Querschnitts, in den zweiten Zylinder geleitet wird. Um hingegen auf Kosten des Wirkungsgrads höchste Setzenergien zu erreichen, kann auf die Zwischenspeicherung in (nahezu) konstantem Volumen verzichtet werden: Die vom ersten (Verdichter-)Kolben im zunächst geschlossenen ersten Zylinder verdichtete Luft kann über ein Überdruckventil dem zweiten Zylinder mit dem zweiten (Arbeits-)Kolben geführt werden und dabei in thermischen Kontakt mit der elektrisch betreibbaren Wärmequelle gebracht werden (welche z.B. in Gestalt elektrisch beheizter Strömungsleitbleche vorliegen kann), die sogar im zweiten Zylinder selbst angeordnet sein kann.

Viertes nicht-beanspruchtes Beispiel zum Verständnis der Erfindung:
Das vierte Beispiel bezieht sich auf die Möglichkeit, zur Energie-Zwischenspeicherung mit einem Arbeitsgasreservoir in einem polytropen, möglichst reversiblen isothermen Regime zu arbeiten. Um dies zu erreichen, muss das Arbeitsgasreservoir stets auf einem hohen Druckniveau gehalten werden: Der Quotient bzw. das Druckverhältnis Pmax/Pmin zwischen dem Arbeitsgasreservoir-Druck Pmax vor einem Stellvorgang und Pmin nach einem Stellvorgang sollte möglichst wenig größer als 1 sein, zum Beispiel in einem Bereich von 1 < Pmax/Pmin < 2, bevorzugt in einem Bereich von 1 < Pmax/Pmin < 1.5. Dabei ist allerdings zu beachten, dass diese Arbeitsweise zwar dem Wirkungsgrad zu Gute kommt, dies jedoch zulasten der effektiven (genutzten) Energiedichte des Arbeitsgasreservoirs geht, dessen Gewicht und Baugröße bei der Auslegung des Setzgeräts unbedingt berücksichtigt werden sollte. Es ist entsprechend ein Kompromiss zu finden. Ein handgeführtes Nagelsetzgerät gemäß dem vierten Beispiel kann eine elektrisch betriebene Hydraulikpumpe umfassen, mit deren Hilfe ein Hydraulikspeicher (bspw. ein Membran- oder Metallfaltenbalg-Speicher) geladen wird mit einer Druckerhöhung bspw. von 200 auf 300 Atmosphären. Prinzipiell kann nun durch Öffnen eines Hydraulik-Ventils mit einem hydraulisch angetriebenen Kolben ein Nagel gesetzt werden. Der hydraulisch angetriebene Kolben kann indes auch genutzt werden, ein Arbeitsgas - und hier zum Beispiel gefilterte Luft - zu verdichten, um so einen zweiten Kolben (geringeren Querschnitts) auf eine hohe Geschwindigkeit zu bringen, um anschließend mit Hilfe der kinetischen Energie des zweiten Kolbens einen Nagel zu setzen. Auf diesem Wege kann wiederum dem verdichteten Arbeitsgas vor oder während seiner Expansion mit Hilfe einer elektrisch betriebenen Wärmequelle Wärme zugeführt und so das Arbeitsvermögen stark erhöht werden, was wiederum neben hohen Geschwindigkeiten des zweiten Kolbens (Setzkolben) insbesondere die Verwendung eines kleineren und leichteren Hydraulikspeichers ermöglicht.

Sechstes nicht-beanspruchtes Beispiel zum Verständnis der Erfindung:
Dieses Beispiel ist dadurch gekennzeichnet, einen sogenannten Thomson-Coil-Antrieb zu umfassen, bei welchem eine bspw. vermittels einer Kondensatorentladung betriebene Spule einen Kurzschlussläufer antreibt, welcher an einem Kolben befestigt, in einen Kolben eingelassen oder ganz oder teilweise mit dem Kolben identisch ist, wobei der Kolben stark bevorzugt aus einer aushärtbaren Aluminiumlegierung hoher elektrisch Leitfähigkeit gebildet wird, und wobei der Kolben mit einer Kolbenstange versehen sein kann, einen Nagel einzutreiben. Zum Setzen eines Nagels wird hierbei z.B. eine Kondensatorentladung über die Spule des Thomson-Coil-Antriebs durchgeführt, woraufhin die Spule den Kolben abstößt. Der Kolben kann sich sodann in einem ihm zugeordneten Zylinder bewegen und ein Arbeitsgas verdichten. Sofern der Zylinder auf der der Thomson-Spule abgewandten Seite geschlossen ist, so bildet die Anordnung eine Gasfeder: Die Luft wird (vorliegend nahezu adiabatisch) vom Kolben zuerst verdichtet und treibt diesen dann zurück in seine Ausgangslage (Rückfedern zur Spule hin). Beim Rückfedern kann die Kolbenstange einen Nagel mitnehmen und setzen. Zur Steigerung des Arbeitsvermögens (d.h. der Setzenergie) kann dem verdichteten Arbeitsgas wiederum Energie zugeführt werden, beispielsweise in der Form von Wärme durch eine großflächige Heizquelle. Eine derart großflächige Heizquelle wir zum Beispiel durch die Bereitstellung eines Heizschaums ermöglicht (z.B. Kanthalschaum).Der Fachmann versteht, dass die Poren eines derartigen Heizschaums nicht zu gering sein dürfen, z.B. Poren im µm-Bereich, um einen zu großen Druckverlust beim Über- bzw. Durchströmen der Oberfläche zu verhindern.

Die obige Anordnung bietet noch einen weiteren Vorteil: Der Stellvorgang beginnt damit, dass sich der Kolben im Setzgerät nach hinten, also vom Nagel fort bewegt - dies erhöht infolge der Impulserhaltung den Anpressdruck: Das Setzgerät "will" sich nach vorn bewegen und kann dies bei gegebenem Spiel auch tun. Nach "quasi-adiabatischer" Reflexion an der Gasfeder, der eine extrem progressive Charakteristik inhärent ist, d.h. ein immer weiteres Ansteigen einer effektiven Federkonstante der Gasfeder, kann der Kolben in seiner Anfangslage zum Ruhen kommen. Mit anderen Worten wird eine "lokale" Federkonstante D(V₂)= A^{∗}(dp₂/dV₂) in N/m immer größer, je mehr sich der Kolben einer Endlage annähert. Da sich die Kolbenfläche A nicht ändert, gilt im adiabatischen Grenzfall p₂=p₁^{∗}(V₁/V₂)^{κ} mit κ ≈ 1.4 für Luft, entsprechend wächst der Druck näherungsweise exponentiell mit dem Isentropenexponenten κ. In diesem Fall bleibt der Schwerpunkt des Nagelsetzgerätes *in summa* während eines vollständigen Setzvorgangs unverändert - mit einer Rücklaufeinrichtung könnte Rückschlagfreiheit erreicht werden. Tatsächlich kann keine vollständige Rückschlagfreiheit erreicht werden, da beim Eintreiben des Nagels Impuls von der Maschine nach außen übertragen wird. Es kann aber der Rückschlag erheblich vermindert sein, was bei der Handhabung erhebliche Vorteile bietet, insbesondere betreffend die Ermüdung des Nutzers.

Erstes Ausführungsbeispiel:
Diesem Ausführungsbeispiel liegt die Idee zu Grunde, einen Thomson-Coil-Aktuator nicht als Kompressor sondern - unter für ihn physikalisch höchst vorteilhaften Bedingungen - direkt zum Verrichten mechanischer Arbeit einzusetzen, also als elektrische Energiequelle im Sinne des Hauptanspruchs. Dies wird im Folgenden detaillierter erläutert anhand einer besonders vorteilhaften Variante des ersten Ausführungsbeispiels, in welchem gleich zwei Thomson-Coil-Aktuatoren zur Anwendung kommen, und bei welchem einem die Rolle des Kompressors und dem anderen die der elektrischen Energiequelle zugerechnet werden kann.

Diese Ausführungsform der Erfindung wird im Schnitt in Fig. 1 dargestellt. Fig. 1 zeigt einen Antrieb, insbesondere einen Antrieb für ein handgeführtes Nagelsetzgerät. Auch in dieser Beschreibung ist deren beispielhaftes Wesen zu berücksichtigen; so kann u.a. bei entsprechender elektrischer Beschaltung auch ein einziger anstelle zweier Kondensatoren verwendet werden (s.u.). Auch das erste Ausführungsbeispiel dient lediglich dem besseren Verständnis der Erfindung.

Fig. 1 zeigt eine Kolbenstange 50, einen Kolben 30 (insb. aus einer aushärtbaren Aluminiumlegierung), Kurzschlussläufer 31, 32 (insbes. Kurzschlussringe, z.B. aus Elektrokupfer), eine Dichtung 80, Statoren 11, 12 (z.B. aus einem fachmännisch ausgewählten ferromagnetischen Werkstoff), (Erreger-)spulen 21, 22, einen gestuften, abschnittsweise doppelwandiger Zylinder 40, Öffnungen 41, 42, bspw. in Form den Umfang umlaufender Bohrungen, Widerlager 71, 72, ggf. außerdem Kühlkörper, eine Kolbenrückführung 60, z.B. ein E-Motor mit Rutschkupplung zum sicheren Transport und ggf. auch dem Halten von Kolben 30 in seine Hubanfangslage nach einem Setzvorgang.

Zu Beginn eines Stellvorganges liegt Kolben 30 möglichst dicht an Spule 21 an, wobei eine Berührung beider Teile konstruktiv (z.B. durch einen Anschlag) ausgeschlossen werden sollte. Dann wird zuerst ein erster Kondensator über Spule 21 entladen, sodass diese den Kolben elektrodynamisch abstößt. In Fig.1 hat sich der Kolben bereits etwas in Bewegung gesetzt, es ist zu sehen, dass sich ein mit der beginnenden Kolbenbewegung zunehmendes Volumen 02 (in Fig. 1 links vom Kolben 30) ausbildet, in welchem zunächst ein Unterduck herrscht. Dieser Unterdruck kann bei korrekter Bemessung der Antriebskomponenten vernachlässigt werden. Indem sich Kolben 30 in Richtung von Spule 22 bewegt, erhöht er den Druck in Volumen 01 (in Fig. 1 rechts vom Kolben 30). Nachdem der Kolben die Öffnungen 41 überstrichen hat, kann Arbeitsgas aus Volumen 01 über die Öffnungen 41, 42 zur in Fig.1 linken Kolbenseite, mithin in Volumen 02, gefördert werden. Sobald der Kolben die Öffnungen 42 überstreicht, schließt er ein Arbeitsgasvolumen ein und komprimiert dieses; die Kompression kann dabei nahezu adiabatisch erfolgen und zu einem außerordentlich steilen (schnellen) Druckanstieg im dann verbleibenden Restvolumen führen. Das von Kolben 30, der Wand von Zylinder 40 und Stator 12 eingeschlossene Gas speichert nicht nur Energie: Es verhindert auch, dass es zu einer schädlichen Kollision zwischen Kolben 30 und dem aus Spule 22 und Stator 12 gebildeten Thomson-Coil-Ensemble kommen kann. Nun wird mit der Kolbenbewegung synchronisiert ein zweiter Kondensator über Spule 22 entladen, wobei die Entladung bevorzugt noch (kurz!) vor dem Umkehren des Kolbens eingeleitet wird. Dabei ist die Entladung so zu bemessen, dass sich in der Erregerspule ein Strommaximum einstellt, welches erst erreicht wird, nachdem der Kolben seine Bewegungsrichtung (durch elektrodynamische- und Gaskräfte) in Richtung der Hubanfangslage umgekehrt hat, der Kolben auch bereits eine nicht-verschwindende Geschwindigkeit von wenigstens 5m/s aufweist, und der Kolben bevorzugt nicht weiter von der ihm zugewandten Oberfläche der Spule 22 entfernt ist als deren halbe Spulenlänge (die Spulenlänge entspricht der Ausdehnung der Spule entlang der Bewegungsrichtung des Kolbens). Auf diese Weise kann der aus Spule 22, Stator 12 und dem Kolben 30 mit Kurzschlussläufer 32 gebildete Thomson-Coil-Aktuator einen sehr hohen elektrischen Wirkungsgrad erreichen.

Der bei FEM-Simulationen gefundene überraschend hohe Wirkungsgrad bei der Wandlung der im zweiten Kondensator gespeicherten elektrostatischen Energie von über 50% ist darauf zurückzuführen, dass die momentan gebildete Gasfeder (d.h. wenn die Belüftungsschlitze vom Kolben überstrichen werden) das Anlaufen des Thomson-Coil-Aktuators unterstützt. Anschließend bewegt sich der Kolben in seine Hubanfangslage zurück, wobei wiederum der Einschluss von Luft (diesmal in Volumen 02) einen zerstörerischen Aufprall des Kolbens gegen Stator 11 oder Spule 21 verhindern kann. Bei dieser Anordnung kann der Nagel während der an einen Freikolbenmotor erinnernden Hin- und Herbewegung des Kolbens transportiert werden, sodass er von Kolbenstange 50 mitgenommen und gesetzt werden kann.

Der in Fig.1 gezeigte Aufbau kann weiter vereinfacht werden, indem anstelle zweier Thomson-Spulen eine einzige eingesetzt wird - nämlich die, durch welche die Kolbenstange geführt wird - und der Kolben einfach in einem geschlossenen Zylinder, also gegen eine Gasfeder, läuft. Ein solches System kann über eine Mehrzahl von Zyklen zu immer höheren Energien hin erregt werden, wobei jeweils im Bereich desjenigen Umkehrpunkts, bei welchem der Kolben sich im Einflussbereich der Erregerspule befindet, die Erregerspule erfindungsgemäß bestromt wird, um die kinetische Energie des Kolbens zu erhöhen. Eine solche Anordnung bedarf allerdings einer steuerbaren Nagelzuführung, damit der Nagel erst dann in den Stellweg der Kolbenstange gebracht wird, wenn die maximale kinetische Energie des Kolbens genügend groß ist. Jedenfalls ist von Vorteil, die Kolbenposition zu erfassen, bevorzugt ortsaufgelöst und in (quasi-)Echtzeit.

## Patentansprüche

1. Antrieb für ein handgeführtes Nagelsetzgerät, umfassend zumindest
- eine erste Erregerspule (22);
- einen zur ersten Erregerspule (22) beweglich angeordneten ersten Kurzschlussläufer (32);
- einen elektrischen Energiespeicher;
- einen oder mehrere Halbleiterschalter;
- eine elektronische Steuerung zum Betätigen des oder der Halbleiterschalter;
- eine Feder sowie
- Mittel, den ersten Kurzschlussläufer zum Einleiten eines Stellvorgangs zunächst in Richtung der ersten Erregerspule (22) zu beschleunigen,
**dadurch gekennzeichnet, dass**:
- die Feder eine progressive Kennlinie aufweist, und
- der erste Kurzschlussläufer (32) mit der progressiven Feder in mechanischer oder fluiddynamischer Verbindung steht oder verbindbar ist, die Bewegungsrichtung des ersten Kurzschlussläufers (32) umzukehren, diesen also durch Federwirkung von der ersten Erregerspule (22) fort zu reflektieren, wobei mit Hilfe der elektronischen Steuerung eine Entladung des elektrischen Energiespeichers über die erste Erregerspule (22) herbeigeführt wird, welche mit der Bewegung und/oder Position des ersten Kurzschlussläufers (32) relativ zur ersten Erregerspule (22) synchronisiert eingeleitet wird, wobei der Antrieb so bemessen wird, dass ein Maximum des Stromes in der ersten Erregerspule (22) erreicht wird, nachdem der erste Kurzschlussläufer (32) seine Bewegungsrichtung bereits geändert hat, er sich also von einer Oberfläche der ersten Erregerspule (22) wieder entfernt, jedoch von der ersten Erregerspule (22) noch nicht weiter entfernt ist als die erste Erregerspule (22) lang ist.

2. Antrieb nach Anspruch 1, wobei der erste Kurzschlussläufer (32) als pneumatischer Kolben ausgebildet und/oder in einen pneumatischen Kolben eingebettet ist und der pneumatische Kolben Teil der als Gasfeder ausgebildeten mindestens einen progressiven Feder ist.

3. Antrieb nach einem der Ansprüche 1 - 2, wobei der Antrieb so bemessen wird, dass am Umkehrpunkt des ersten Kurzschlussläufers (32) dessen Abstand zur ersten Erregerspule (22) geringer ist als eine halbe Länge der Erregerspule.

4. Antrieb nach einem der Ansprüche 1 - 3, wobei der erste Kurzschlussläufer (32) koaxial zur ersten Erregerspule (22) beweglich angeordnet ist.

5. Antrieb nach einem der Ansprüche 1 - 4, wobei der elektrische Energiespeicher durch einen Kondensator oder eine Kondensatorbank ausgebildet ist.

6. Antrieb nach einem der Ansprüche 1 - 5, wobei der eine oder die mehreren Halbleiterschalter einen Thyristor aufweisen.

7. Antrieb nach einem der Ansprüche 1 - 6, wobei die Feder mit progressiver Kennlinie eine Gasfeder ist.

8. Antrieb nach einem der Ansprüche 1 - 7, wobei die Erregerspule flach ausgeführt ist.

## Claims

1. Drive for a hand-held nail gun, comprising at least
- a first exciter coil (22);
- a first squirrel cage rotor (32) arranged so as to be movable with respect to the first exciter coil (22);
- an electrical energy store;
- one or several semiconductor switches;
- an electronic controller for actuating the semiconductor switch(es);
- a spring and
- means to accelerate the first squirrel cage rotor for inducing an actuating procedure initially in the direction of the first exciter coil (22),
**characterised in that**:
- the spring has a progressive characteristic curve, and
- the first squirrel cage rotor (32) is in mechanical or fluid-dynamic connection, or can be connected, to the progressive spring, to reverse the direction of movement of the first squirrel cage rotor (32), that is, to reflect it by means of spring action away from the first exciter coil (22), wherein with the aid of the electronic controller an unloading of the electrical energy store is induced via the first exciter coil (22) which is initiated synchronised with the movement and/or position of the first squirrel cage rotor (32) relative to the first exciter coil (22), wherein the drive is dimensioned such that a maximum of the current is reached in the first exciter coil (22) after the first squirrel cage rotor (32) has already changed its direction of movement, that is, has moved away again from a surface of the first exciter coil (22), but is not yet further away from the first exciter coil (22) than the length of the first exciter coil (22).

2. Drive according to claim 1, wherein the first squirrel cage rotor (32) is in the form of a pneumatic piston and/or is embedded in a pneumatic piston and the pneumatic piston is part of the at least one progressive spring which is designed as a gas spring.

3. Drive according to any of claims 1 - 2, wherein the drive is dimensioned such that at the turning point of the first squirrel cage rotor (32) its distance from the first exciter coil (22) is less than half the length of the exciter coil.

4. Drive according to any of claims 1 - 3, wherein the first squirrel cage rotor (32) is arranged so as to be movable coaxially to the first exciter coil (22).

5. Drive according to any of claims 1 - 4, wherein the electrical energy store is designed as a capacitor or a capacitor bank.

6. Drive according to any of claims 1- 5, wherein the one or the several semiconductor switches have a thyristor.

7. Drive according to any of claims 1 - 6, wherein the spring with a progressive characteristic curve is a gas spring.

8. Drive according to any of claims 1 - 7, wherein the exciter coil is flat in design.

## Revendications

1. Entraînement pour une cloueuse manuelle, comprenant au moins
- une première bobine d'excitation (22) ;
- un premier rotor à cage d'écureuil (32) agencé de manière mobile par rapport à la première bobine d'excitation (22) ;
- un accumulateur d'énergie électrique ;
- un ou plusieurs commutateurs à semi-conducteurs ;
- une commande électronique destinée à actionner le ou les commutateur(s) à semi-conducteurs ;
- un ressort ainsi que
- des moyens permettant d'accélérer le premier rotor à cage d'écureuil pour induire un processus de déplacement tout d'abord en direction de la première bobine d'excitation (22),
**caractérisé en ce que** :
- le ressort présente une courbe caractéristique progressive, et
- le premier rotor à cage d'écureuil (32) est ou peut être mis en liaison mécanique ou selon la dynamique des fluides avec le ressort progressif pour inverser le sens de déplacement du premier rotor à cage d'écureuil (32), et donc éloigner celui-ci de la première bobine d'excitation (22) sous l'action du ressort, la commande électronique permettant de réaliser par l'intermédiaire de la première bobine d'excitation (22) une décharge de l'accumulateur d'énergie électrique qui peut être induite de manière synchronisée avec le déplacement et/ou la position du premier rotor à cage d'écureuil (32) par rapport à la première bobine d'excitation (22), dans lequel l'entraînement est dimensionné de telle manière qu'un maximum de courant est atteint dans la première bobine d'excitation (22), après que le premier rotor à cage d'écureuil (32) a déjà changé de sens de déplacement, il s'éloigne donc à nouveau d'une surface de la première bobine d'excitation (22), mais n'est toutefois pas encore plus éloigné de la première bobine d'excitation (22) que la longueur de la première bobine d'excitation (22).

2. Entraînement selon la revendication 1, dans lequel le premier rotor à cage d'écureuil (32) est conçu sous forme de piston pneumatique et/ou est incorporé dans un piston pneumatique et le piston pneumatique constitue une partie du au moins un ressort progressif conçu en tant que ressort à gaz.

3. Entraînement selon l'une quelconque des revendications 1 et 2, dans lequel l'entraînement est dimensionné de telle sorte qu'au point d'inversion du premier rotor à cage d'écureuil (32), la distance de celui-ci par rapport à la première bobine d'excitation (22) est inférieure à une demi-longueur de la bobine d'excitation.

4. Entraînement selon l'une quelconque des revendications 1 à 3, dans lequel le premier rotor à cage d'écureuil (32) est agencé de manière mobile coaxialement par rapport à la première bobine d'excitation (22).

5. Entraînement selon l'une quelconque des revendications 1 à 4, dans lequel l'accumulateur d'énergie électrique est formé par un condensateur ou un banc de condensateurs.

6. Entraînement selon l'une quelconque des revendications 1 à 5, dans lequel le ou les plusieurs commutateurs à semi-conducteurs présente(nt) un thyristor.

7. Entraînement selon l'une quelconque des revendications 1 à 6, dans lequel le ressort avec la courbe caractéristique progressive est un ressort à gaz.

8. Entraînement selon l'une quelconque des revendications 1 à 7, dans lequel la bobine d'excitation est réalisée plate.
